Europäisches Patentamt

European Patent Office

Office européen des brevets

(11) Veröffentlichungsnummer: **0 339 210**
**A1**

## (12) EUROPÄISCHE PATENTANMELDUNG

(21) Anmeldenummer: 89103695.6

(22) Anmeldetag: 03.03.89

(51) Int. Cl.⁴: **E21B 7/26 , E21B 7/28 ,**
**E21B 7/20 , //F16L1/02,**
**E03F3/06**

(30) Priorität: 23.04.88 DE 3813767

(43) Veröffentlichungstag der Anmeldung:
**02.11.89 Patentblatt 89/44**

(84) Benannte Vertragsstaaten:
**AT BE CH DE ES FR GB GR IT LI LU NL SE**

(71) Anmelder: **Hans Brochier GmbH & Co**
**Martha Strasse 16**
**D-8500 Nürnberg(DE)**

(72) Erfinder: **Zimmermann, Heinz, Dipl.-Ing.**
**Im Harl 12**
**D-8133 Feldafing(DE)**

(74) Vertreter: **Czowalla . Matschkur Patentanwälte**
**Dr.-Kurt-Schumacher-Strasse 23 Postfach**
**9109**
**D-8500 Nürnberg 11(DE)**

(54) **Rohraufweitungsgerät.**

(57) Rohraufweitungsgerät zum Zerbrechen und Verdrücken alter Metallrohre ins umgebende Erdreich in
Form eines in das Rohr einschiebbaren Spreizkörpers aus mehreren unabhängig voneinander und
achsparallel radial hydraulisch nach außen verschiebbaren Längssegmenten (2), von denen bevorzugt wenigstens eines mit einer an die Innenwand
des aufzuweitenden Rohrs sich anlegenden Längsbrechkante (9) versehen ist, wobei die Längssegmente einander in allen radialen Stellungen im Bereich der Seitenränder überlappen.

FIG.1

## Rohraufweitungsgerät

Die Erfindung bezieht sich auf ein Rohraufweitungsgerät zum Zerbrechen und Zerdrücken alter Metallrohre ins umgebende Erdreich in Form eines in das Rohr einschiebbaren Spreizkörpers aus mehreren unabhängig voneinander und achsparallel radial hydraulisch nach außen verschiebbaren Längssegmenten, von denen bevorzugt wenigstens eines mit einer an die Innenwand des aufzuweitenden Rohrs sich anlegenden Längsbrecherkante versehen ist.

Bei einem derartigen, in der Patentschrift DE 36 25 140 CI beschriebenen Rohraufweitungsgerät erfolgt eine gleichmäßige Verdrückung des Altrohrs über die gesamte Länge des Spreizzylinders nach außen, wobei durch das Vorsehen wenigstens einer Längsbrechkante sichergestellt ist, daß das Rohr durch eine über die gesamte Länge des Spreizzylinders sich erstreckende Linienbelastung zunächst durch Biegebeanspruchung aufgebrochen wird, so daß es dann sehr viel einfacher durch bloßes weiteres Aufbrechen nach außen ins Erdreich verdrückbar ist. Durch diese Ausbildung ergibt sich nicht nur ein robuster Aufbau und ein sauberes Aufreißen und Verdrücken eines Altrohrs in das Erdreich über größere Längsabschnitte, sondern man vermeidet auch die Gefahr, daß das Rohraufweitungsgerät bei dickeren Rohren im Rohrinneren stecken bleiben kann.

Auf der anderen Seite können sich aber in der Praxis manchmal Schwierigkeiten ergeben - insbesondere wenn eine sehr starke Verdrängung ins Erdreich zum Einziehen eines wesentlich größeren neuen Versorgungsrohrs stattfinden soll - indem entweder Scherben des Altrohrs oder Steine oder ähnliche Teile in die Schlitze zwischen den auseinander gespreizten Längssegmenten eindringen können und dann das Zurückziehen der Segmente in die ursprüngliche Position verhindern. Auf diese Weise ist dann nicht mehr möglich, das Rohraufweitungsgerät in seinen ursprünglichen Durchmesser zurückzuführen, so daß es gar nicht mehr in den anschließenden Abschnitt des aufzubrechenden Altrohrs eingeführt werden kann.

Der Erfindung liegt daher die Aufgabe zugrunde ein Rohraufweitungsgerät der eingangs genannten Art so auszugestalten, daß bei einfachstem Aufwand und ohne Verlust der vorteilhaften Wirkungen der bekannten Anordnung diese Gefahr einer Verstopfung von Lücken zwischen den Längssegmenten des Spreizkörpern vermieden ist.

Zur Lösung dieser Aufgabe ist erfindungsgemäß vorgesehen, daß die Längssegmente in allen radialen Stellungen im Bereich der Seitenränder überlappen, wobei bevorzugt die Seitenränder abwechselnd mit ober- und unterseitigen, etwa der halben Wandungsdicke entsprechenden Ausnehmungen versehen sind, so daß quasi ein nach unten gestufter Rand des einen Segments mit einem sich nach oben gestuften Rand überlappt und somit bei im wesentlichen geschlossener Außen- und Innenform die erfindungsgemäß angestrebte Durchmesserveränderung des Spreizkörpers ohne das Auftreten von Lücken zwischen den Längssegmenten stattfinden kann. Die Verspreizung der Längssegmente soll dabei bevorzugt wiederum in der Weise erfolgen, wie Sie auch bereits in dem genannten älteren Patent DE 36 25 140 C1 beschrieben worden ist, nämlich mit Hilfe eines vorzugsweise am vorlaufenden Ende des Spreizzylinders angeordneten Hydraulikzylinder, dessen den Spreizzylinder in dessen Längsachse durchsetzende Kolbenstange in Radialebenen liegende Spreizkeile trägt, denen in jeweils der gleichen Ebene liegende Gegenkeile auf der Innenseite Ihres Längssegments zugeordnet sind. Ebenso ist es selbstverständlich auch bei dieser Ausführungsform eines Rohraufweitungsgerät zweckmäßig, eine Einzugsvorrichtung vorzusehen, die beim Rückhub des Hydraulikzylinders die Längssegmente nach innen zurückholt.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1 einen Schnitt durch den vorderen Abschnitt eines erfindungsgemäßen Rohraufweitungsgeräts,

Fig. 2 einen vergrößerten Querschnitt längs der Linie II-II in Fig. 1 und

Fig. 3 einen Längsschnitt durch eine abgewandelte Ausführungsform eines erfindungsgemäßen Rohraufweitungsgeräts mit spitzem Gerätekopf.

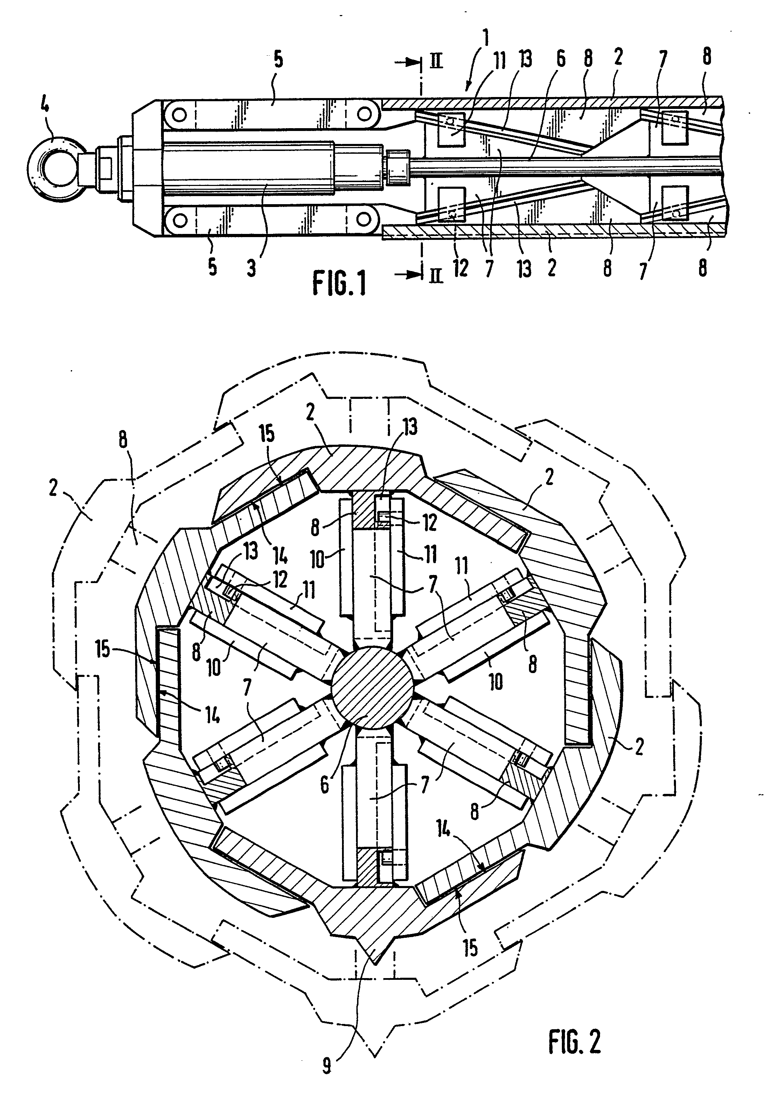

Das erfindungsgemäße Rohraufweitungsgerät gemäß den Fig. 1 und 2 umfaßt einen Spreizzylinder 1, dessen Mantel in sechs Längssegmente 2 unterteilt ist, die mit Hilfe eines Hydraulikzylinders 3 und einer nachfolgend noch zu beschreibenden Keilspreizvorrichtung in der in Fig. 2 angedeuteten Weise nach außen verspreiz bar sind, um ein zu sanierendes Altrohr aufzubrechen und ins umgebende Erdreich zu verdrücken, so daß Platz zum Einfügen eines Einzugrohrs geschaffen wird. Das Rohraufweitungsgerät wird im dargestellten Ausführungsbeispiel durch das zu sanierende Altrohr gezogen, wofür am vorderen Ende des Hydraulikzylinders ein Ring 4 vorgesehen ist. Der Hydraulikzylinder 3 ist mit Hilfe von beidends gelenkig angelenkten Längsstreben 5 gegenüber den Stirnenden der Längssegmente 2 des Spreizzylinders 1 abgestützt, während seine Kolbenstange 6 in der Längsachse des Spreizzylinders 1 verläuft. Auf der Kolbenstange 6 sind in Radialebenen liegende Spreizkeile 7 angeordnet, die mit Gegenkeilen 8 an der Innenseite der Längssegmente 2 zusammenwirken. Beim Ausschieben der Kolbenstange 6 aus den im dargestellten Ausführungsbeispiel als Teleskopzylinder ausgebildeten Hydraulikzylinder 3 werden die Längssegmente 2 durch das Zusammenwirken der Spreizkeile 7 und 8 parallel zu sich selbst radial nach außen geschoben. Durch die einander entsprechend unterseitigen Ausnehmungen 14 und oberseitigen Ausnehmungen 15 jedes Längssegments 2 ergibt sich in Verbindung mit der einander überlappenden Ausbildung aller Segmente 2 eine Konfiguration, bei der sichergestellt ist, daß in allen radialen Ausschubstellungen die Seitenränder der Längssegmente 2 einander überlappen, so daß keine Lücken auf treten können durch die Erdreich, Steine oder gar Scherben des zerbrochenen und verdrückten Altrohrs eindringen und das Wiederzurückziehen der Längssegmente in die Ausgangsstellung verhindern können.

Um das Aufbrechen des Altrohrs zu erleichtern ist wenigstens eines der Längssegmente, im dargestellten Ausführungsbeispiel das unterste in Fig. 2, mit einem durch eine mittig aufgesetzte Dreieckrippe gebildeten Längsbrechkante 9 versehen. Diese gelangt zunächst in Kontakt mit der Innenfläche des zu verdrückenden Altrohrs und bricht diese in der Längsachse aufgrund der erreichbaren hohen Linienbelastung durch Biegebeanspruchung auf. Nach diesem Ausbrechen bedarf es dann einer wesentlich geringeren Kraft, um das so aufgebrochene Rohr mit Hilfe der nach außen bewegen Längssegmente weiter aufzubrechen und ins Erdreich hineinzudrücken. Die Spreizkeile 7 sind mit die Gegenkeile 8 beidseits umfassenden Führungslappen 10 und 11 versehen, von denen jeweils die letzteren einen Scherbolzen 12 tragen, der in eine zur Keilkante parallele, mithin zur Längsachse der Vorrichtung geneigte Führungsnut 13 eingreift. Auf diese Weise ist eine Einzugsvorrichtung, durch die beim Rückhub des Hydraulikzylinders die Längssegmente 2 zwangsweise mit nach innen in die in Fig. 2 ausgezogene Ausgangsstellung zurückgezogen werden, so daß dann das gesamte Rohraufweitungsgerät in der Länge des Spreizzylinders 1 in den benachbarten noch nicht verdrückten Abschnitt des zu sanierenden Altrohrs weiter verschoben werden kann.

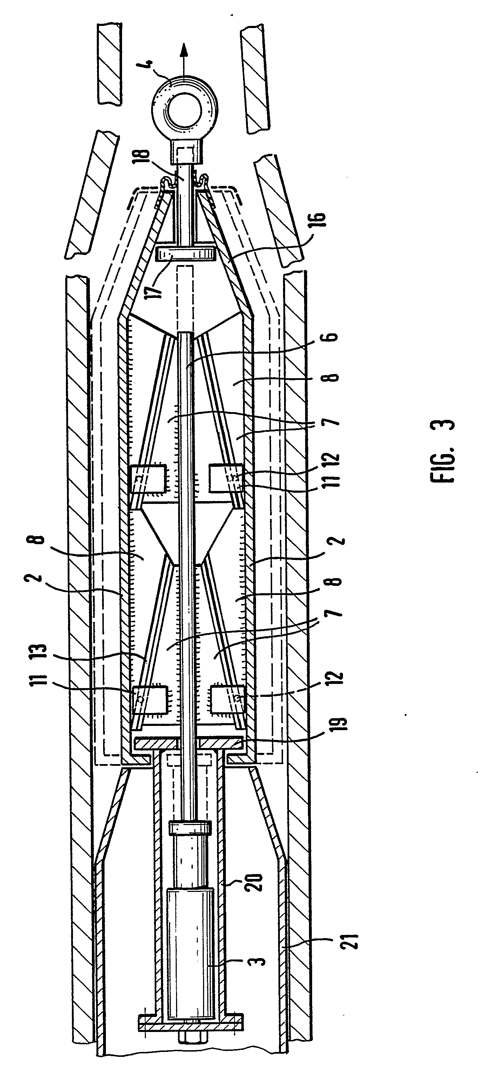

Bei dem in Fig. 3 dargestellten Ausführungsbeispiel ist das Rohraufweitungsgerät mit einem spitzen Gerätekopf ausgebildet, so daß es auch bei eingebrochenem Altrohr oder gegebenenfalls einem im Durchmesser kleineren Altrohr eingesetzt werden kann. Zu diesem Zweck ist zunächst vorgesehen, daß der Hydraulikzylinder 3 nicht an das vordere, sondern im Bereich des hinteren Endes des Spreizkörpers angeordnet ist. Auf diese Weise besteht die Möglichkeit die Längssegmente 2 des Spreizkörpers am vorderen Ende abzuwinkeln, so daß sie eine konische Spitze 16 bilden, wobei im Bereich dieser konischen Spitze selbstverständlich die gleiche Art der Überlappung vorliegen soll, die sie in Fig. 2 im einzelnen dargestellt ist. Entsprechend der geänderten spitzen Kopfform des Spreizkörpers ist ein Zugkopf 17 vorgesehen, der über eine Stange 18 mit dem Zugring 4 verbunden ist. Man erkennt, daß durch den verbreiterten, plattenförmigen Zugkopf 17 ein Zug unabhängig von der radialen Stellung der Segmente 2 auf den Spreizkörper ausgeübt werden kann, der in Fig. 3 ausgezogen in seiner eingefahrenen und strichliert in seiner radial nach außen verschobenen Stellung dargestellt ist. Mit 19 ist ein Widerlagerring bezeichnet, an welchem ein Zylinder 20 angeschweißt ist, der schließlich wiederum mit seinem links liegenden Boden die Abstützung für den Hydraulikzylinder 3 sorgt. 21 bezeichnet schließlich eine Aufweithülse, wie sie bei derartigen Rohraufweitungsgeräten üblicherweise als Nachläufer zum eigentlichen Spreizkörper vorgesehen ist.

## Ansprüche

1. Rohraufweitungsgerät zum Zerbrechen und Verdrücken alter Metallrohre ins umgebende Erdreich in Form eines in das Rohr einschiebbaren Spreizkörpers aus mehreren unabhängig voneinander und achsparallel radial hydraulisch nach außen verschiebbaren Längssegmenten, von denen bevorzugt wenigstens eines mit einer an die Innenwand des aufzuweitenden Rohrs sich anlegenden Längsbrechkante versehen ist, dadurch gekennzeichnet, daß die Längssegmente (2) einander in allen radialen Stellungen im Bereich der Seitenränder überlappen.

2. Rohraufweitungsgerät nach Anspruch 1, dadurch gekennzeichnet, daß die Seitenränder abwechselnd mit ober- und unterseitigen etwa der halben Wandungsdicke entsprechenden Ausnehmungen (14, 15) versehen sind.

3. Rohraufweitungsgerät nach Anspruch 3, dadurch gekennzeichnet, daß die Längsbrechkante (9) durch eine mittige Dreiecksrippe gebildet ist.

4. Rohraufweitungsgerät nach einem der Ansprüche 1 bis 3, dadurch gekennzeichnet, daß der Spreizkörper einen konischen Kopf 16 aufweist, der durch die abgewinkelten sich in gleicher Weise überlappenden Enden der Längssegmente (2) gebildet ist.

FIG.1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | WO-A-8 707 322  (YARNELL)<br>* Seite 5, Zeilen 20-21; Anspruch 1;<br>Seite 6, Zeilen 23-36 *<br>--- | 1,2,4 | E 21 B   7/26<br>E 21 B   7/28<br>E 21 B   7/20 //<br>F 16 L   1/02<br>E 03 F   3/06 |
| Y | GB-A-2 151 325  (YARNELL)<br>* Seite 2, Zeilen 67-71 *<br>--- | 1,2,4 | |
| X | EP-A-0 190 502  (BRITISCH GAS CORP.)<br>* Seite 3, Zeilen 10-11; Seite 5,<br>Zeilen 16-18; Seite 10, Zeilen 14-17;<br>Seite 5, Zeilen 11-14 *<br>--- | 1,3 | |
| X | DE-A-3 408 244  (WITTE BOHRTECHNIK<br>GmbH)<br>* Seite 6, Zeilen 7-15; Seite 7, Zeilen<br>7-10; Figur 2 *<br>--- | 1,2,4 | |
| A | GB-A-2 152 624  (BRITISH GAS CORP.)<br>* Seite 1, Zeilen 102-110 *<br>--- | 3 | |
| A | GB-A-2 164 411  (ROBBINS)<br>* Seite 2, Zeilen 58-63 *<br>--- | 3 | **RECHERCHIERTE SACHGEBIETE (Int. Cl.4)** |
| A | EP-A-0 216 100  (TRACTO-TECHNIK)<br>* Spalte 4, Zeilen 12-17 *<br>--- | 3 | E 21 B |
| A | GB-A-2 138 532  (DALY LTD)<br>* Insgesamt *<br>--- | 3 | |
| A,D | DE-C-3 625 140  (BROCHIER GmbH)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 21-07-1989 | SOGNO M.G. |